(19) Europäisches Patentamt
European Patent Office
Office européen des brevets

(11) Veröffentlichungsnummer: **0 320 725 B1**

# (12) EUROPÄISCHE PATENTSCHRIFT

(45) Veröffentlichungstag der Patentschrift: **06.05.92**

(51) Int. Cl.$^5$: **C08L 77/00**, C08L 71/12, //(C08L77/00,71:12,21:00,25:00), (C08L71/12,77:00,21:00,25:00)

(21) Anmeldenummer: **88120205.5**

(22) Anmeldetag: **03.12.88**

Die Akte enthält technische Angaben, die nach dem Eingang der Anmeldung eingereicht wurden und die nicht in dieser Patentschrift enthalten sind.

## (54) Thermoplastische Formmassen, Verfahren zu ihrer Herstellung und ihre Verwendung.

(30) Priorität: **15.12.87 DE 3742444**

(43) Veröffentlichungstag der Anmeldung:
**21.06.89 Patentblatt 89/25**

(45) Bekanntmachung des Hinweises auf die Patenterteilung:
**06.05.92 Patentblatt 92/19**

(84) Benannte Vertragsstaaten:
**BE DE FR GB NL**

(56) Entgegenhaltungen:
**EP-A- 0 147 874**
**EP-A- 0 222 250**
**EP-A- 0 244 090**
**EP-A- 0 253 123**

(73) Patentinhaber: **BASF Aktiengesellschaft**
**Carl-Bosch-Strasse 38**
**W-6700 Ludwigshafen(DE)**

(72) Erfinder: **Taubitz, Christof, Dr.**
**In der Dreispitz 15**
**W-6706 Wachenheim(DE)**
Erfinder: **Reimann, Horst, Dr.**
**Adelheidstrasse 26**
**W-6520 Worms 1(DE)**
Erfinder: **Boehlke, Klaus, Dr.**
**Gerhart-Hauptmann-Strasse 53**
**W-6717 Hessheim(DE)**
Erfinder: **Gausepohl, Hermann, Dr.**
**Neuweg 10**
**W-6704 Mutterstadt(DE)**
Erfinder: **Plachetta, Christoph, Dr.**
**Albert-Einstein-Allee 12**
**W-6703 Limburgerhof(DE)**

EP 0 320 725 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Beschreibung

Die Erfindung betrifft neue thermoplastische Formmassen, enthaltend als wesentliche Komponenten

A) 5 - 95 Gew.% eines teilaromatischen Copolyamids, aufgebaut aus

$A_1$) 20 - 90 Gew.% Einheiten, die sich von Terephthalsäure und Hexamethylendiamin ableiten,

$A_2$) 0 - 50 Gew.% Einheiten, die sich von ε-Caprolactam ableiten und

$A_3$) 0 - 80 Gew.% Einheiten, die sich von Adipinsäure und Hexamethylendiamin ableiten, und

gegebenenfalls bis zu 15 Gew.% weiterer Polyamidbausteine $A_4$), wobei die Komponente $A_2$) oder/und $A_3$) ingesamt mindestens 10 Gew.% der Gesamteinheiten ausmachen

B) 5 - 95 Gew.% eines Polyphenylenethers

C) 0 - 45 Gew.% eines vinylaromatischen Polymeren

D) 0 - 40 Gew.% eines schlagzäh modifizierenden Kautschuks

wobei sich die Prozentzahlen A) - D) zu 100 % ergänzen.

Außerdem betrifft die Erfindung ein Verfahren zur Herstellung derartiger Formmassen sowie deren Verwendung zur Herstellung von Formkörpern und die daraus hergestellten Formkörper.

Polyphenylenether (PPE) sind Kunststoffe mit sehr guten thermischen, mechanischen und elektrischen Eigenschaften, weisen jedoch nur eine sehr geringe Lösungsmittelbeständigkeit auf. Dies gilt auch für ein im Handel befindliches Gemisch aus Polyphenylenether und Styrolpolymerisaten. Die Verwendbarkeit derartiger Produkte ist daher eingeschränkt.

Aus der US-A-3 379 792 ist bekannt, daß die Schmelzfließeigenschaften von Polyphenylenethern durch Zusatz von bis zu 25 Gew.% eines Polyamids verbessert werden. Ferner wird in dieser Patentschrift festgestellt, daß bei einem Polyamidzusatz von mehr als 20 Gew.% andere Eigenschaften des Polyphenylenethers erheblich verschlechtert werden.

Aus der GB-A 2 054 623 sind auch bereits Mischungen aus Polyphenylenethern und Polyamiden mit höheren Polyamid-Gehalten bekannt; zur Erzielung guter Eigenschaften ist es jedoch erforderlich, einen längeren Mischvorgang in der Schmelze vorzunehmen. Bei solch hoher thermischer Belastung über größere Zeiträume treten jedoch leicht Abbauerscheinungen auf.

In der EP-A 24 120 und EP-A 46 040 werden Mischungen aus Polyamiden, nicht modifizierten Polyphenylenethern und Maleinsäureanhydrid und/oder Maleinsäureimid beschrieben. Die in diesen Schriften beschriebenen Massen bzw. die daraus hergestellten Formkörper weisen eine unbefriedigende Schlagzähigkeit, insbesondere bei der Verwendung von Kautschuk als zusätzliche Komponente, und einen für viele Anwendungszwecke viel zu niedrigen Schmelzindex (MFI) auf.

Aus der JP-A 59/66452 sind Abmischungen aus Polyphenylenethern und Polyamiden bekannt, die ein mit Carbonsäuren oder deren Derivaten modifiziertes PPE enthalten, welches in Anwesenheit von mindestens 0,1 Gew.%, vorzugsweise 0,3 - 5 Gew.% eines Radikalstarters hergestellt wird.

Aus der WO-A 87/0540 (PPE) und der EP-A 226 910 sind Formmassen auf der Basis von Polyphenylenethern und Polyamiden bekannt, in denen ein modifiziertes PPE enthalten ist, welches durch Umsetzung von PPE mit Verbindungen, die eine C = C-Doppelbindung und eine säurefunktionelle Gruppe enthalten, hergestellt wird. Die auf diese Weise erhältichen Produkte weisen zwar gute Schlagzähigkeitseigenschaften auf, doch wäre für einige Anwendungen eine Verbesserung der Wärmeformbeständigkeit und eine Verringerung der Schwindung bei der Verarbeitung wünschenswert.

Aus der EP-A 222 250 sind PPE/PA Formmassen bekannt, in denen als Monomerbausteine der Polyamide auch aromatische Monomere genannt wurden. Die Steifigkeit und Festigkeit der Formkörper sind jedoch verbesserungswürdig.

Aufgabe der vorliegenden Erfindung war es daher, thermoplastische Formmassen auf der Basis von Polyphenylenethern und Polyamiden zur Verfügung zu stellen, die sich durch eine gute Wärmeformbeständigkeit und eine geringe Schwindung bei der Verarbeitung auszeichnen.

Diese Aufgabe wird erfindungsgemäß durch die eingangs definierten thermoplastischen Formmassen gelöst. Bevorzugte Massen dieser Art sind den Unteransprüchen zu entnehmen.

Als Komponente A) enthalten die erfindungsgemäßen thermoplastischen Formmassen 5 - 95, insbesondere 10 - 90 und besonders bevorzugt 25 - 70 Gew.% eines teilaromatischen Coplyamids A), welches wie vorstehend definiert aufgebaut ist.

Derartige Copolyamide sind im Prinzip bekannt und in der Literatur, z.B. der DE-C 929 151, der GB-PS 1 114 541, der DE-A 16 69 45, der DE-A 16 20 997 und der DE-A 34 07 492 beschrieben.

Als besonders vorteilhaft haben sich Polyamide herausgestellt, die einen möglichst niedrigen Triamingehalt, vorzugsweise unter 0,5 Gew.% und insbesondere unter 0,3 Gew.% aufweisen. Derartige Produkte lassen sich aufgrund ihrer geringeren Vernetzungsneigung und ihrer niedrigeren Schmelzviskosität bei gleicher Lösungsviskosität besser verarbeiten.

Im folgenden werden solche Copolyamide näher beschrieben.

Als Komponente $A_1$) enthalten diese teilaromatischen Copolyamide 20 - 90 Gew.%, vorzügsweise 35 - 85 Gew.-%, Einheiten, die sich von Terephthalsäure und Hexamethylendiamin ableiten. Ein geringer Anteil der Terephthalsäure, vorzugsweise nicht mehr als 10 Gew.% der gesamten eingesetzten aromatischen Dicarbonsäuren kann durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von $\epsilon$-Caprolactam ableiten und/oder Einheiten, die sich von Adipinsäure und Hexamethylendiamin ableiten.

Der Anteil an Einheiten die sich von $\epsilon$-Caprolactam ableiten, beträgt maximal 50 Gew.%, vorzugsweise 20 - 50 Gew.%, insbesondere 25 - 40 Gew.%, während der Anteil an Einheiten die sich von Adipinsäure und Hexamethylendiamin ableiten, bis zu 80 Gew.%, vorzugsweise 5 - 70 Gew.%, besonders bevorzugt 20 - 70 Gew.-% und insbesondere 35 - 65 Gew.Z betragt.

Die Copolyamide A) können auch sowohl Einheiten von $\epsilon$-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.% beträgt, vorzugsweise mindestens 20 Gew.%. Das Verhältnis der Einheiten, die sich von $\epsilon$-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte $X_1$ bis $X_5$ festgelegten Fünfecks liegt, wobei die Punkte $X_1$ bis $X_5$ folgendermaßen definiert sind:

| | |
|---|---|
| $X_1$ | 40 Gew.% Einheiten $A_1$) |
| | 60 Gew.% Einheiten $A_3$) |
| $X_2$ | 60 Gew.% Einheiten $A_1$) |
| | 40 Gew.% Einheiten $A_3$) |
| $X_3$ | 80 Gew.% Einheiten $A_1$) |
| | 5 Gew.% Einheiten $A_2$) |
| | 15 Gew.% Einheiten $A_3$) |
| $X_4$ | 80 Gew.% Einheiten $A_1$) |
| | 20 Gew.% Einheiten $A_2$) |
| $X_5$ | 50 Gew.% Einheiten $A_1$) |
| | 50 Gew.% Einheiten $A_2$) |

In der Abbildung ist das durch diese Punkte festgelegte Fünfeck in einem Dreistoffdiagramm dargestellt.

Als besonders vorteilhaft für viele Anwendungszwecke haben sich Polyamide mit 50 - 80, insbesondere 60 - 75 Gew.% Einheiten, die sich von Terephthalsäure und Hexamethylendiamin ableiten (Einheiten $A_1$)) und 20 - 50, vorzugsweise 25 - 40 Gew.% Einheiten, die sich von $\epsilon$-Caprolactam ableiten (Einheiten $A_2$)) enthalten, erwiesen.

Neben den vorstehend beschriebenen Einheiten $A_1$) bis $A_3$) können die teilaromatishen Copolyamide A) noch bis zu 15 Gew.%, insbesondere nicht mehr als 10 Gew.% an weiteren Polyamidbausteinen $A_4$) enthalten, wie sie von anderen Polyamiden bekannt sind. Diese Bausteine können sich von Dicarbonsäuren mit 4 - 16 Kohlenstoffatomen und aliphatischen oder cycloalphatischen Diamine mit 4 - 16 Kohlenstoffatomen sowie von Aminocarbonsäuren bzw. entsprechenden Lactamen mit 7 - 12 Kohlenstoffatomen ableiten. Als geeignete Monomere dieser Typen seien hier nur Suberinsäure, Azelainsäure, Sebacinsäure oder Isophthalsäure als Vertreter der Dicarbonsäuren, 1,4-Butandiamin, 1,5-Pentandiamin, Piperazin, 4,4'-Diaminodicyclohexylmethan, 2,2-(4,4′-Diaminodicyclohexyl)propan oder 3,3′-Dimethyl-4,4′-Diaminodicyclohexylmethan als Vertreter der Diamine und Capryllactam, Önanthlactam, Omega-Aminoundecansäure und Laurinlactam als Vertreter von Lactamen bzw. Aminocarbonsäuren genannt.

Bedingt durch den niedrigeren Triamingehalt der bevorzugten Copolyamide weisen diese bei gleicher Lösungsviskosität niedrigere Schmelzviskositäten im Vergleich zu Produkten gleicher Zusammensetzung auf, die einen höheren Triamingehalt (insbesondere Gehalt an Dihexamethylentriamin) aufweisen. Dies verbessert sowohl die Verarbeitbarkeit als auch die Produkteigenschaften.

Die Schmelzpunkte der teilaromatischen Copolyamide A) liegen im Bereich von 260 °C bis über 300 °C, wobei dieser hohe Schmelzpunkt auch mit einer hohen Glasübergangstemperatur von in der Regel mehr als 75, insbesondere mehr als 85 °C verbunden ist.

Binäre Copolyamide auf der Basis von Terephthalsäure, Hexamethylendiamin und $\epsilon$-Caprolactam weisen bei Gehalten von etwa 70 Gew.% an Einheiten, die sich von Terephthalsäure und Hexamethylendiamin ableiten, Schmelzpunkte im Bereich von 300 °C und eine Glasübergangstemperatur von mehr als 110 °C auf.

Binäre Copolyamide auf der Basis von Terephthalsäure, Adipinsäure und Hexamethylendiamin (HMD) erreichen bereits bei niedrigeren Gehalten von etwa 55 Gew.% Einheiten aus Terephthalsäure und Hexamethylendiamin Schmelzpunkte von 300 °C und mehr, wobei die Glasübergangstemperatur nicht ganz so hoch liegt wie bei binären Copolyamiden, die anstelle von Adipinsäure bzw. Adipinsäure/HMD $\epsilon$-Caprolactam enthalten.

Die Herstellung der vorstehend beschriebenen Copolyamide mit niedrigem Triamingehalt kann nach dem in den EP-A 129 195 und 129 196 beschriebenen Verfahren erfolgen.

Gemäß diesem Verfahren wird eine wäßrige Lösung der Monomeren, d.h. in diesem Fall der Monomeren, die die Einheiten $A_1$) bis $A_3$) bilden, unter erhöhtem Druck unter gleichzeitiger Verdampfung von Wasser und Bildung eines Präpolymeren auf eine Temperatur von 250 - 300 °C erhitzt, anschließend werden Präpolymere und Dämpfe kontinuierlich getrennt, die Dämpfe rektifiziert und die mitgeführten Diamine zurückgeleitet. Schließlich wird das Präpolymer in eine Polykondensationszone geleitet und unter einem Überdruck von 1 - 10 bar und einer Temperatur von 250 - 300 °C polykondensiert. Wesentlich ist bei dem Verfahren, daß die wäßrige Salzlösung unter einem Überdruck von 1 - 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.% beträgt.

Durch diese kurzen Verweilzeiten wird die Bildung von Triaminen weitgehend verhindert.

Die verwendeten wäßrigen Lösungen haben in der Regel einen Monomergehalt von 30 - 70 Gew.%, insbesondere von 40 - 65 Gew.%.

Die wäßrige Salzlösung wird vorteilhaft mit einer Temperatur von 50 - 100 °C kontinuierlich in eine Verdampferzone geleitet, in der die wäßrige Salzlösung unter einem Überdruck von 1 - 10, vorzugsweise von 2 -6 bar auf eine Temperatur von 250 - 330 °C erhitzt wird. Es versteht sich, daß die angewandte Temperatur über dem Schmelzpunkt des jeweils herzustellenden Polyamids liegt.

Wie bereits erwähnt, ist es bei diesem bevorzugten Verfahren wesentlich, daß die Verweilzeit in der Verdampferzone maximal 60 Sekunden, vorzugsweise 10 - 55 Sekunden und insbesondere 10 - 40 Sekunden beträgt.

Der Umsatz beim Austritt aus der Verdampferzone beträgt mindestens 93, vorzugsweise 95 - 98 % und der Wassergehalt liegt vorzugsweise im Bereich von 2 - 5, insbesondere 1 - 3 Gew.%.

Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die beim Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative Viskosität von 1,2 - 1,7 hat, wird in eine Polymerisationszone geleitet. In der Polymerisationszone wird die anfallende Schmelze bei einer Temperatur von 250 - 330 °C, insbesondere 270 - 310 °C, und unter einem Überdruck von 1 - 10 bar, insbesondere 2 - 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 - 30 Minuten ein. Das so erhaltene Polyamid, das in der Regel eine relative Viskosität von 1,2 - 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase mittels überhitztem Wasserdampf bei einer Temperatur unterhalb des Schmelzpunktes, z.B. von 170 - 240 °C, bis zur gewünschten Viskosität kondensiert. Vorteilhaft verwendet man hierfür den am Kopf der Kolonne anfallenden Wasserdampf.

Die relative Viskosität, gemessen in 1 %iger Lösung in 96 Gew.% $H_2SO_4$ bei 23 °C, liegt nach der Festphasennachkondensation im allgemeinen im Bereich von 2,2 - 5,0, vorzugsweise von 2,3 - 4,5.

Nach einer anderen bevorzugten Arbeitsweise wird die aus der Polykondensationszone ausgetragene Polyamidschmelze in eine weitere Polykondensationszone geleitet und dort unter fortlaufender Ausbildung neuer Oberflächen bei einer Temperatur von 285 bis 310 °C vorteilhaft unter vermindertem Druck, z.B. von 1 - 500 mbar, bis zur gewünschten Viskosität kondensiert. Geeignete Vorrichtungen sind als Finisher bekannt.

Ein weiteres Verfahren, welches dem oben beschriebenen ähnelt, ist in der EP-A 129 196 beschrieben. Wegen Einzelheiten sei hier auf die Schrift selbst verwiesen.

Als Komponente B enthalten die erfindungsgemäßen Formmassen 5 bis 95, vorzugsweise 20 bis 80, insbesondere 30 bis 65 Gew.% mindestens eines Polyphenylenethers.

Dabei handelt es sich um an sich bekannte Polyphenylenether, die beispielsweise durch oxidative Kupplung aus in o-Position disubstituierten Phenolen hergestellt werden können. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Nur beispielsweise seien hier einige Polyphenylenether aufgeführt, wie sie u.a. in O. Olabisi, l.c., S. 224 bis 230 und 245 genannt werden, z.B. Poly(2,6-diethyl-1,4-phenylen)-oxid, Poly(2-methyl-6-ethyl-1,4-phenylen)oxid, Poly(2-methyl-6-propyl-1,4-phenylen)oxid, Poly-(2,6-dipropyl-1,4-phenylen)oxid, Poly(2-ethyl-6-propyl-1,4-phenylen)oxid, bevorzugt Poly(2,6-dimethyl-1,4-phenylen)oxid oder Copolymere, wie solche, die 2,3,6-Trimethylphenol enthalten, außerdem Polymermischungen. Besonders bevorzugt ist jedoch Poly(2,6-dimethyl-1,4-phenylen)oxid.

Die eingesetzten Polyphenylenether weisen im allgemeinen ein Molekulargewicht (Gewichtsmittelwert) im Bereich von 10.000 bis 80.000, vorzugsweise von 15.000 bis 60.000 auf.

Bevorzugt als Komponente B) werden dabei modifizierte Polyphenylenether, die aus den nachstehend näher beschriebenen Komponenten $b_1$) bis $b_5$) hergestellt werden.

Unter "Modifizierung" soll dabei eine durch die Umsetzung der Komponenten $b_1$) bis $b_5$) hervorgerufene Veränderung des Polyphenylenethers verstanden werden.

Bei der Komponente $b_1$) handelt es sich um an sich bekannte Polyphenylenether, wie sie vorstehend bereits beschrieben wurden.

Der Anteil der Komponente $b_1$), bezogen auf die Summe der Komponenten $b_1$) bis $b_5$) beträgt 4,95 - 99,9, vorzugsweise 10 - 99,9 und insbesondere 50 - 90 Gew.%.

Die Komponente $b_2$), die gegebenenfalls am Aufbau des modifizierten Polyphenylenethers beteiligt ist, ist ein vinylaromatisches Polymer, das vorzugsweise mit dem eingesetzten Polyphenylenether verträglich ist.

Das Molekulargewicht (Gewichtsmittel) dieser Polymere liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, $\alpha$-Methylstyrol, p-Methylstyrol genannt; in untergeordneten Anteilen (vorzugsweise nicht mehr als 20, insbesondere nicht mehr als 8 Gew.%), können auch Comonomere wie (Meth)acrylnitril oder (Meth)acrylsäureestern am Aufbau beteiligt sein. Ein besonders bevorzugtes vinylaromatisches Polymeres ist Polystyrol. Es versteht sich, daß auch Mischungen solcher Polymeren eingesetzt werden können.

Verfahren zur Herstellung solcher vinylaromatischer Polymerer sind an sich bekannt und in der Literatur beschrieben, so daß sich hier nähere Angaben erübrigen.

Nur beispielsweise seien hier als geeignete Polymerisationsverfahren die Masse-, Suspensions-, Emulsions- oder Lösungspolymerisation erwähnt.

Der Anteil des vinylaromatischen Polymeren $b_2$) an den bevorzugten Polyphenylenethern B) liegt im Bereich von 0 bis 90, vorzugsweise 0 bis 70 und insbesondere 0 bis 60 Gew.%.

Bei Verwendung von Fumarsäure ($b_{31}$) als Bestandteil $b_3$) hat es sich häufig als vorteilhaft erwiesen, wenn die Formmassen einen gewissen Mindestgehalt an vinylaromatischem Polymeren $b_2$), vorzugsweise mindestens 1,95 Gew.%, insbesondere mindestens 4,95 Gew.%, bezogen auf die Komponente B) enthalten.

Als wesentliche Komponente $b_3$) enthalten die bevorzugten modifizierten Polyphenylenether B) mindestens eine der Verbindungen $b_{31}$) bis $b_{35}$)

Prinzipiell können auch Mischungen verschiedener Verbindungen $b_{31}$) bis $b_{35}$) eingesetzt werden, doch ist im allgemeinen die Verwendung nur einer dieser Verbindungsarten vorteilhaft.

Bei der Komponente $b_{31}$) handelt es sich um eine $\alpha,\beta$-ungesättigte Dicarbonsäure oder deren Anhydrid. Beispielsweise seien genannt Maleinsäure, Fumarsäure, Itaconsäure, Tetrahydrophtalsäue, Citraconsäure, Maleinsäureanhydrid, Itaconsäureanhydrid, Citraconsäureanhydrid oder Tetrahydrophtalsäurenanhydrid. Besonders bevorzugt als $b_{31}$) ist Fumarsäure. Der Anteil von $b_{31}$) beträgt 0,05 bis 10 Gew.%, vorzugsweise 0,1 bis 5 Gew.%, bezogen auf die Summe der Komponenten $b_1$) bis $b_5$).

Die Komponenten $b_{32}$) sind Maleinimide der allgemeinen Formel I

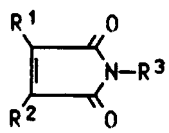

(I),

wobei $R^1$, $R^2$ und $R^3$ Wasserstoff, Alkyl-, Alkoxy-, Cycloalkyl-, Alkenyl-, Aryl-, Arylen- oder Alkylengruppen mit 1 bis 12 C-Atomen sind.

Vorzugsweise sind die Substituenten $R^1$, $R^2$ und $R^3$ Wasserstoff oder Alkylgruppen mit 1 bis 4 C-Atomen, beispielsweise Methyl-, Ethyl- oder n-, i- oder t-Butyl, Cycloalkylgruppen mit bis zu 8 C-Atomen oder Phenylgruppen, die gegebenenfalls alkyl- oder alkoxysubstituiert sein können.

Nur beispielhaft seien als bevorzugte Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-(p-Methoxyphenyl)maleinimid, N-Benzylmaleinimid, N-(1-Naphthyl)maleinimid oder deren Mischungen genannt. Von diesen wird N-Phenylmaleinimid besonders bevorzugt.

Der Anteil des Maleinimids der allgemeinen Formel I beträgt 0,05 bis 10, vorzugsweise 0,1 bis 5 Gew.%, bezogen auf die Summe der Komponenten $b_1$) bis $b_5$).

Ebenfalls geeignet als Komponente $b_3$) sind Amidgruppen enthaltende Monomere mit mindestens einer polymerisierbaren Doppelbindung, vorzugsweise solche der allgemeinen Formeln II oder III

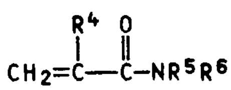

(II)

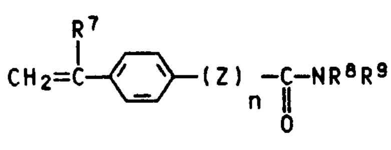

(III),

wobei $R^4$, $R^5$, $R^6$, $R^7$, $R^8$ und $R^9$ Wasserstoff, Alkyl- oder Alkoxygruppen mit 1 bis 12 C-Atomen, Cycloalkylgruppen mit bis zu 12 C-Atomen oder Arylgruppen und Z Alkylengruppen mit 1 bis 12 C-Atomen darstellen und n den Wert 0 oder 1, vorzugsweise 0 hat.

Bevorzugte Substituenten $R^5$, $R^6$, $R^8$ und $R^9$ sind Alkylgruppen mit 1 bis 10 C-Atomen, Cycloalkylgruppen mit bis zu 8 C-Atomen oder Arylgruppen, vorzugsweise Phenyl. $R^4$ und $R^7$ sind bevorzugt H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt.

Bevorzugt werden Acrylamid, Methacrylamid, N-Phenylacrylamid und N-Phenylmethacrylamid verwendet.

Der Anteil der Komponente $b_{33}$) beträgt 0,05 bis 10, vorzugsweise 0,1 bis 10, insbesondere 1 bis 5 Gew.%, bezogen auf die Summe der Komponenten $b_1$) bis $b_5$).

Als Komponente $b_3$) kann auch ein Lactam-Gruppen enthaltendes Monomer mit mindestens einer polymerisierbaren Doppelbindung ($b_{34}$) eingesetzt werden.

Vorzugsweise werden Lactame der allgemeinen Struktur IV

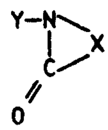

(IV)

eingesetzt, wobei X eine lineare oder verzweigte Alkylengruppe mit 2 bis 15 C-Atomen darstellt und Y die allgemeine Formel

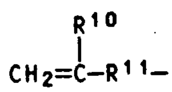

wobei $R^{10}$ ein Wasserstoffatom, eine Alkyl- oder Alkoxygruppe mit 1 bis 4 C-Atomen und $R^{11}$ einen zweibindigen Substituenten

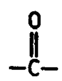

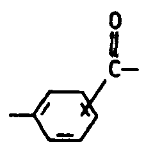

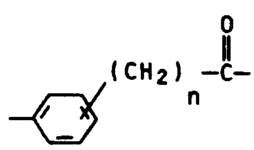

,

wobei n eine ganze Zahl von 1 bis 4 ist, darstellen.

Bevorzugte Substituenten Y sind ganz allgemein Vinyl-, Acryloyl-, Methacryloyl- oder Reste mit Styrol-Grundstrukturen.

Besonders bevorzugt sind Lactameinheiten, die zu Polyamiden polymerisierbar oder copolymerisierbar sind, wie dies in Houben-Weyl, Methoden der organ. Chemie, Band X/2, S. 511 bis 587, (1958) und Band XIV/2, S. 111 bis 131, beschrieben wird.

Beispielsweise seien genannt:

β-Propiolactame (Azetidin-2-one), wie

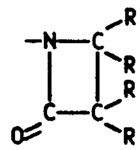

wobei R gleiche oder verschiedene Alkylgruppen mit 1 bis 6 C-Atomen oder Wasserstoff sind. Derartige Verbindungen sind beschrieben bei R. Graf, Angewandte Chemie, 74, 523 bis 530, (1962) und H. Bastian, Angewandte Chemie, 80, 304 bis 312, (1968).

Nur beispielhaft sei als ein Vertreter dieser Gruppe $3,3'$-Dimethyl-3-propiolactam genannt.

Ebenfalls bevorzugte Lactam-Einheiten sind 2-Methylpyrrolidone

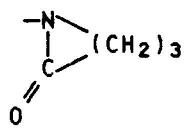
,

ϵ-Caprolactam

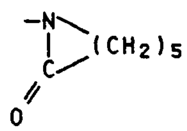
,

und außerdem 7-Önantholactam, 8-Capryllactam und 12-Laurinlactam wie sie bei K. Dachs, Angewandte Chemie, 74, 540 bis 545, (1962) beschrieben werden. Ganz besonders bevorzugt sind 2-Pyrrolidone und ϵ-Caprolactame.

Es können auch Mischungen dieser Verbindungen eingesetzt werden.

Vorzugsweise sind die Lactameinheiten über eine Carbonylgruppe am Stickstoff in die modifizierten Polyphenylenether B eingebaut, wie dies nachstehend allgemein dargestellt ist.

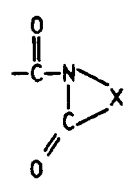

Als besonders bevorzugtes Beispiel einer Komponente $b_{34}$) sei hier nur N-(Meth)acryloyl-ϵ-caprolactam

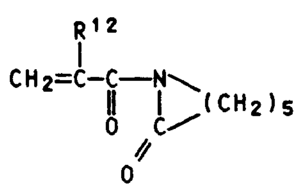

genannt,
wobei $R^{12}$ ein Wasserstoffatom oder eine Methylgruppe sein kann.

Der Anteil der Komponente $b_{34}$) beträgt 0,05 bis 10, vorzugsweise 0,1 bis 10 und insbesondere 0,5 bis 5 Gew.%, bezogen auf die Summe der Komponenten $b_1$) bis $b_5$).

Bei der Komponente $b_{35}$) handelt es sich um Ester oder Amide von $\alpha,\beta$-ungesättigten Dicarbonsäuren. Dabei können sowohl Mono- als auch Diester bzw. Mono- oder Diamide dieser Säuren eingesetzt werden. Als Beispiele für bevorzugte Dicarbonsäuren seien Maleinsäure, Fumarsäure, Chlormaleinsäure, Dichlormaleinsäure, Methylmaleinsäure, Butenylbernsteinsäure und Tetrahydrophthalsäure genannt, von denen Maleinsäure und Fumarsäure besonders bevorzugt werden.

Zur Herstellung der Ester oder Amide können diese Säuren oder deren Anhydride mit den entsprechenden Alkoholen bzw. Aminen umgesetzt werden. Entsprechende Verfahren sind an sich bekannt und in der Literatur beschrieben, so daß sich hier nähere Angaben erübrigen.

Als Alkohole zur Herstellung der Ester werden bevorzugt primäre und sekundäre Monoalkohole, wie Methanol, Ethanol, n- und i-Propanol, n- und i-Butanol, Pentanole, Hexanole, Heptanole, Octanole, z.B. 2-Ethylhexylalkohol und höhere Alkohole wie Dodecanole und cycloaliphatische Alkohole, z.B. Cyclohexanol eingesetzt. Weiter eignen sich auch Alkohole mit aromatischen Struktureinheiten wie z.B. Benzylalkohol. Neben C, H und O können die Alkohole auch Heteroatome - in der Hauptkette oder als Substituenten - wie N, S und Si enthalten. Schließlich seien auch Alkohole mit Ketogruppen in der Kette oder mit Halogensubstituenten erwähnt. Bevorzugt werden jedoch Alkanole mit 1 bis 6 C-Atomen.

Als Amine zur Herstellung der Halbamide seien ganz allgemein sekundäre Amine und N-Alkylaniline genannt. Beispiele hierfür sind N-Methyl- oder N-Ethylalkylamine oder N-Methylanilin. Wie die Alkohole können die Amine auch Heteroatome und funktionelle Gruppen enthalten.

Ganz allgemein werden Ester, insbesondere Halbester den Amiden vorgezogen. Der Anteil von $b_{35}$) beträgt 0,05 bis 10, vorzugsweise 0,1 bis 5 Gew.%, bezogen auf das Gesamtgewicht der Komponente B).

Modifizierte Polyphenylenether, die die Komponente $b_{35}$) enthalten, weisen häufig besonders gute Fließeigenschaften, d.h. besonders hohe Schmelzindex-Werte (MFI) auf.

Gegebenenfalls können bei der Herstellung der bevorzugten modifizierten Polyphenylenethers B auch weitere Comonomere $b_4$) eingesetzt werden, die unter den Herstellungsbedingungen mit den Komponenten $b_1$) und gegebenenfalls $b_2$) reagieren bzw. auf diese aufpfropfen. Beispielsweise seien hier Acrylsäure, Methacrylsäure, Acrylate, Methacrylate und vinylaromatische Monomere wie Styrol, $\alpha$-Methylstyrol und Vinyltoluol genannt, um nur einige aufzuführen.

Der Anteil der Komponente $b_4$) beträgt 0 bis 80, vorzugsweise 0 bis 45 und insbesondere nicht mehr als 20 Gew.%, bezogen auf die Summe der Komponenten $b_1$) bis $b_5$). Besonders bevorzugt werden Formmassen, die keine Komponente $b_4$) enthalten.

Als Komponente $b_5$) werden bei der Herstellung der bevorzugten modifizierten Polyphenylenether B) gegebenenfalls 0 - 20, vorzugsweise 0,01 bis 0,09, besonders bevorzugt 0,02 - 0,08 und insbesondere 0,03 -0,07 Gew.% an Radikalstartern eingesetzt.

Der Anteil der Komponente $b_5$) ist in der Regel geringer als die Summe der Anteile der Komponenten $b_3$) und $b_4$).

Prinzipiell können als Radikalstarter die für diesen Zweck bekannten und in der Literatur (z.B. J.K. Kochi, Free Radicals, J. Wiley-Verlag. New York 1973) beschriebenen Verbindungen eingesetzt werden.

In einigen Fällen hat es sich als vorteilhaft herausgestellt, Radikalstarter einzusetzen, deren Halbwertzeit ausreichend groß ist, um sicherzustellen, daß zu dem Zeitpunkt, zu dem das PPE aufgeschmolzen ist, eine signifikante Menge an aktivem Radikalstarter vorhanden ist.

Dies hat zur Folge, daß die Komponenten $b_{31}$) bis $b_{35}$) in einer relativ eindeutigen Reaktion mit dem durch den Radikalstarter aktivierten PPE reagieren und diesen modifizieren können.

Es ist noch nicht eindeutig geklärt, an welcher Stelle des PPE-Moleküls der Radikalstarter angreift, doch deuten erste Erkenntnisse darauf hin, daß die Aktivierung des PPE an dem Methylsubstituenten in o-Stellung zum Sauerstoffatom stattfindet und die Komponenten $b_{31}$) bis $b_{35}$) dementsprechend auch überwiegend in dieser Position angreifen.

Beispielsweise seien als Radikalstarter genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Di-tert.-butylperoxybutan, Dicumylperoxid, tert.-Butylcumylperoxid, 1,3-Di(tert.-butylperoxyisopropyl)benzol und Di-tert.-butylperoxid.

Bevorzugt werden organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

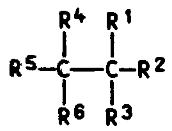

wobei $R^1$ bis $R^6$ unabhängig voneinander Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits wieder funktionelle Gruppen als Substituenten enthalten, wie Carboxyl-, Carboxylderivat-, Hydroxyl-, Amino-, Thiol- oder Epoxygruppen.

Als Beispiele hierfür seien

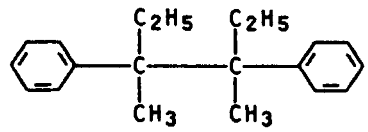

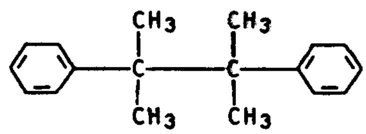

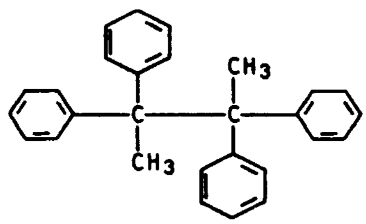

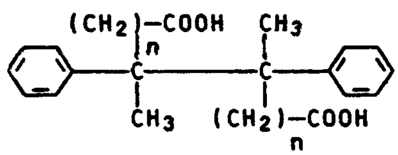

(n = 1 - 5)

genannt. Diese sind zum Teil kommerziell erhältlich. Ganz besonders bevorzugt werden Cumolhydroperoxid und t-Butylhydroperoxid.

Zur Herstellung der bevorzugten modifizierten Polyphenylenether B können die Komponenten $b_1$) bis $b_5$) bei 250 bis 350 ° C, vorzugsweise 265 bis 295 ° C, miteinander umgesetzt werden. Hierzu eignen sich besonders Extruder, da in diesen im allgemeinen auch eine gute Durchmischung der Komponenten erzielt wird. Die Verweilzeiten liegen im allgemeinen im Bereich von 0,5 bis 30 min., vorzugsweise von 1 bis 3 min. Besonders gut für das erfindungsgemäße Verfahren eignen sich Zweischneckenextruder.

Nachstehend wird eine besonders bevorzugte Verfahrensvariante beschrieben.

Die Komponenten $b_1$) bis $b_5$) werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert und das Granulat wird zur Herstellung der erfindungsgemäßen Formmassen eingesetzt.

Prinzipiell ist die Herstellung des modifizierten Polyphenylenethers auch in jedem Reaktionsgefäß, welches eine Reaktion der Komponenten miteinander ermöglicht, durchführbar.

Als weiteren Bestandteil C) können die erfindungsgemäßen Formmassen gegebenenfalls in einer Menge bis zu 45, vorzugsweise bis zu 30 Gew.%, vinylaromatische Polymere enthalten (bezogen auf die Summe der Komponenten A) bis D)). Geeignet sind bevorzugt mit Polyphenylenethern verträgliche Polymere, wie sie bereits bei der Beschreibung der modifizierten Polyphenylenether als Komponente $b_2$) beschrieben wurden. Für nähere Einzelheiten sei deshalb auf die Ausführungen zur Komponente $b_2$) verwiesen.

Die Komponente C) kann auch schlagzäh modifiziert sein. Solche Polymere sind dem Fachmann als schlagzähes Polystyrol (HIPS) bekannt. Dabei werden die vinylaromatischen Polymeren in Gegenwart eines Schlagzähmodifiers hergestellt oder die vinylaromatischen Polymeren mit gepfropften Kautschuken abgemischt. Als kautschukartige Polymere seien beispielsweise Polybutadien-, Styrol-Butadien-, Styrol-b-Butadien, Acrylnitril-Butadien-, Ethylen-Propylen-, Polyacrylat- und Polyisopren-Kautschuke genannt.

Neben den in der Komponente C) gegebenenfalls vorhandenen, gepfropften Kautschuken, wie Polybutadien-, Acrylat-, Styrol-Butadien-, Polybuten-Kautschuk, hydrierten Styrol-Butadien-, Acrylnitril-Butadien-, EthylenPropylen- und Polyisopren-Kautschuken können diese auch ungepfropft als Komponente D) zugesetzt werden. Als Kautschuke D) seien weiter erwähnt styrolgepfropfte Ethylen-Propylen-Kautschuke, thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABA-verschmiert (taper)-, ABAB-, ABAB-verschmierte Stern-Block-Copolymere und ähnliche, analoge Isopren-Blockpolymerisate und (teil)hydrierte Blockcopolymere.

Ebenfalls geeignet als Komponente D sind die für die Schlagzähmodifizierung von Polyamiden bekannten Kautschuke und säuremodifizierten Ethylenpolymerisate, wie sie z.B. in der DE-A 26 22 973 beschrieben werden. Insbesondere seien hier Copolymerisate aus Ethylen, Acrylsäureestern und ungesättigten Carbonsäuren genannt. Derartige Produkte sind im Handel erhältlich.

Die Komponente D) kann in Mengen bis 40, vorzugsweise bis zu 30 Gew.%, insbesondere 5 - 30 Gew.%, bezogen auf die Summe der Komponenten A) bis D), in den erfindungsgemäßen Formmassen vorhanden sein.

Neben den Komponenten A) bis D) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 40, insbesondere nicht mehr als 20 Gew.%, bezogen auf das Gesamtgewicht der Komponenten A) bis D).

Als Zusatzstoffe seien genannt Hitze- und Lichtstabilisatoren, Gleit-und Entformungsmittel und Färbemittel wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe wie Gipsfasern, synthetische Calciumsilikate, Kaolin, calciniertes Kaolin, Wollastonit, Talkum, Kreide, ferner Flammschutzmittel, wie Phosphorverbindungen, z.B. Phosphate, Phosphorsäureester, Phosphorigsäureester, Phosphinsäureester, Phosphonigsäureester, organische Phosphinoxide oder roter Phosphor selbst.

Weiterhin können auch Materialien zur Abschirmung elektromagnetischer Wellen wie Metallflocken, Metallpulver, Metallfasern oder metallbeschichtete Füllstoffe zugesetzt werden.

Auch niedermolekulare oder hochmolekulare Polymere kommen als Zusatzstoffe in Betracht.

Die erfindungsgemäßen thermoplastischen Formmassen erhält man zweckmäßig durch Mischen der Einzelkomponenten bei Temperaturen von 270 bis 350 °C in üblichen Mischvorrichtungen, wie Knetern, Banbury-Mischern und Einschneckenextruder, vorzugsweise jedoch mit einem Zweischneckenextruder. Um eine möglichst homogene Formmasse zu erhalten, ist eine intensive Durchmischung notwendig. Die Abmischreihenfolge der Komponenten kann variiert werden, so können zwei oder gegebenenfalls drei Komponenten vorgemischt werden, es können aber auch alle Komponenten gemeinsam gemischt werden.

Es sei erwähnt, daß bei der Herstellung der Formmassen manchmal eine Reaktion zwischen den Komponenten A) bis D) auftreten kann, so daß im Endprodukt keine reine Mischung dieser Komponenten mehr vorliegt.

Die erfindungsgemäßen Formmassen zeichnen sich durch ihre ausgewogenen Eigenschaften, insbesondere aber durch ihre gute Wärmeformbeständigkeit und ihre geringe Schwindung bei der Verarbeitung aus.

Sie eignen sich besonders zur Herstellung von Formkörpern durch Spritzguß oder Extrusion, insbesondere für thermisch beanspruchte Teile und Teil im Automobilbereich. Im letzteren Anwendungsgebiet ist besonders von Vorteil, daß sich die aus den erfindungsgemäßen Formmassen hergestellten Teile aufgrund ihrer guten Wärmeformbeständigkeit online lackieren lassen, d.h. keine zeit- und kostenintensive getrennte Lackierung erforderlich ist.

Beispiele

Zur Herstellung von erfindungsgemäßen Formmassen und Vergleichsprodukten wurden folgende Komponenten eingesetzt:

Komponente A

A/1 Copolyamid mit 70 Gew.% Einheiten, die sich von Terephthalsäure und Hexamethylendiamin ableiten, und 30 Gew.% Einheiten, die sich von ε-Caprolactam ableiten. Dieses Produkt wurde wie folgt hergestellt:

Eine wäßrige Lösung, bestehend aus 35 kg ε-Caprolactam, 55 kg Terephthalsäure, 38,5 kg Hexamethylendiamin und 128,5 kg Wasser wurde aus einem beheizten Vorratsbehälter bei ca. 80 °C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 295 °C hatte, bei kräftiger Umwälzung beheizt. Der Verdampfer hatte eine Länge von 3 m und einen Inhalt von 180 ml und eine wärmeübertragende Oberfläche von etwa 1300 $cm^2$. Die Verweilzeit im Verdampfer betrug 50 sec. Das aus dem Verdampfer austretende Gemisch aus Präpolymeren und Wasserdampf hatte eine Temperatur von 290 °C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152 °C ein. Der nach dem Entspannungsventil austretende Wasserdampf wurde kondensiert und hatte einen Gehalt an Hexamethylendiamin von weniger als 0,05 Gew.% und einen Gehalt an ε-Caprolactam von weniger als 0,1 Gew.%. Als Kolonnensumpf erhielt man eine wäßrige Lösung von Hexamethylendiamin, die 80 Gew.% Hexamethylendiamin und 1 bis 3 % ε-Caprolactam, jeweils bezogen auf erzeugtes Polyamid enthielt. Diese Lösung wurde über eine Pumpe vor dem Eintritt in den Verdampfer wieder der Ausgangssalzlösung zugegeben.

Nach dem Verdampfer hatte das Präpolymere eine relative Viskosität von 1,25, gemessen in 98 gew.%iger Schwefelsäure bei 20 °C und wies nach der Endgruppenanalyse einen Umsatz von 93 bis 95 % auf. Der Gehalt an Bis-hexamethylentriamin betrug 0,1 bis 0,15 Gew.%, bezogen auf Polyamid.

Nach Austritt der Polymerschmelze aus dem Abscheider hatte das Polyamid eine sehr helle Eigenfarbe und einen äußerst niedrigen Gehalt an Bis-hexamethylentriamin von 0,17 % sowie eine relative Viskosität von 1,65 bis 1,80.

Das Produkt wies in etwa eine Äquivalenz von Carboxyl- und Aminoendgruppen auf.

Der Gehalt an extrahierbaren Anteilen (Extraktion mit Methanol) betrug 3,1 bis 3,3 Gew.%.

Im Austragsextruder wurde die Schmelze dann auf Normaldruck entspannt und bei einer Verweilzeit von weniger als 1 Minute praktisch nicht mehr weiter kondensiert. Das erhaltene Granulat wurde durch kontinuierliche Festphasenkondensation mit überhitztem Wasserdampf bei 195 °C und einer Verweilzeit von 30 Stunden auf eine Endviskosität von η-rel = 2,50 kondensiert. Der Gehalt an extrahierbaren Anteilen betrug dann 0,2 Gew.% (Methanolextrakt).

Zum Vergleich wurden folgende Polyamide eingesetzt.

$A/V_1$ Poly-ε-Caprolactam mit einem Gewichtsmittel des Molekulargewichts von 38 000

$A/V_2$ Poly-ε-Caprolactam mit einem Gewichtsmittel des Molekulargewichts von 35 000.

Komponente B

B/1 90 Gew.% Poly(2,6-dimethyl-1,4-phenylen)ether (PPE) mit einer relativen Viskosität von 0,55 (gemessen in 1 gew.%iger Lösung in $CHCl_3$ bei 25 °C), 8 Gew.% Polystyrol (MFI bei 200 °C und 0,5 kg Belastung = 24 g/10 min) und 2 Gew.% Fumarsäuredimethylester wurden in einem Zweischneckenextruder bei 290 °C aufgeschmolzen und umgesetzt. Anschließend wurde das Produkt in einer Entgasungszone bei 290 °C durch Anlegen von Vakuum entgast.
Die mittlere Verweilzeit im Extruder betrug 3,5 min. Die extrudierte Schmelze wurde durch ein Wasserbad geleitet und anschließend granuliert und getrocknet.

B/2 82 Gew.% PPE (wie bei B/1), 14 Gew.% Polystyrol (wie bei B/1) und 4 Gew.% Maleinsäuremonomethylester wurden, wie bei B/1 beschrieben, umgesetzt.

Komponente C

Polystyrol mit einem MFI (Melt Flow Index) von 24 g/10 min bei 200°C und 5,0 kg Belastung (Polystyrol 144C der BASF AG).

Komponente D

Styrol-Butadien-Styrol-Dreiblockcopolymer mit einem Styrolgehalt von 30 Gew.% (Cariflex® TR 1102 der Fa. Shell AG)

Zur Herstellung der Formmassen wurden die Komponenten A) bis D) auf einem Zweischneckenextruder bei 320°C gemischt, extrudiert und granuliert. Zur Bestimmung der Vicat-B-Temperatur (nach DIN 53460) und der Verarbeitungsschwindung (nach ASTM D 1299) wurden die entsprechenden Prüfkörper gespritzt.

Die Zusammensetzung der Massen und die Ergebnisse der Messungen sind der Tabelle zu entnehmen.

Tabelle

| (alle Angaben in Gew.%) | | | | | | |
|---|---|---|---|---|---|---|
| Bsp. | Zusammensetzung (Gew.%) | | | | Vicat B (°C) | Verarbeitungsschwund (%) |
| | A | B | C | D | | |
| 1 | 50A/1 | 35B/2 | 5 | 10 | 204 | 0,9 |
| 2 | 45A/1 | 45B/2 | - | 10 | 200 | 0,8 |
| 3 | 50A/1 | 36B/1 | - | 14 | 204 | 0,9 |
| 4V | 50A/$V_1$ | 36B/1 | - | 14 | 170 | 1,3 |
| 5V | 50A/$V_1$ | 36B/1 | - | 14 | 187 | 1,4 |
| 6 | 50A/1 | 43B/2 | - | 7 | 205 | 0,9 |
| 7V | 50A/$V_2$ | 43B/2 | - | 7 | 189 | 1,5 |
| 8 | 45A/1 | 50B/1 | 5 | - | 206 | 0,7 |
| V = Vergleichsbeispiele | | | | | | |

**Patentansprüche**

**1.** Thermoplastische Formmassen, enthaltend als wesentliche Komponenten
A) 5 - 95 Gew.% eines teilaromatischen Copolyamids, aufgebaut im wesentlichen aus
$A_1$) 20 - 90 Gew.% Einheiten, die sich von Terephthalsäure und Hexamethylendiamin ableiten,
$A_2$) 0 - 50 Gew.% Einheiten, die sich von $\epsilon$-Caprolactam ableiten und
$A_3$) 0 - 80 Gew.% Einheiten, die sich von Adipinsäure und Hexamethylendiamin ableiten und gegebenenfalls bis zu 15 Gew.% weiterer Polyamidbausteine $A_4$), wobei die Komponente $A_2$) oder/und $A_3$) insgesamt mindestens 10 Gew.% der Gesamteinheiten ausmachen,
B) 5 - 95 Gew.% eines Polyphenylenethers
C) 0 - 45 Gew.% eines vinylaromatischen Polymeren
D) 0 - 40 Gew.% eines schlagzäh modifizierenden Kautschuks
wobei sich die Prozentzahlen A) bis D) zu 100 % ergänzen.

**2.** Thermoplastische Formmassen nach Anspruch 1, dadurch gekennzeichnet, daß der Polyphenylenether B) hergestellt ist aus
$b_1$) 4,95 - 99,9 Gew.% eines unmodifizierten Polyphenylenethers,
$b_2$) 0 - 90 Gew.% eines vinylaromatischen Polymeren,
$b_3$) 0,05 - 10 Gew.% mindestens einer Verbindung aus der Gruppe gebildet aus
$b_{31}$) einer $\alpha,\beta$-ungesättigten Dicarbonsäure oder deren Anhydrid,

$b_{32}$) eines Maleinimids der allgemeinen Formel I

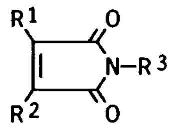 (I),

wobei $R^1$, $R^2$ und $R^3$ Wasserstoff, Alkyl-, Alkoxy-, Cycloalkyl-, Alkenyl-, Aryl-, Arylen- oder Alkylengruppen mit 1 - 12 C-Atomen sind,

$b_{33}$) eines Amid-Gruppen enthaltenden Monomeren mit einer polymerisierbaren Doppelbindung,

$b_{34}$) eines Lactam-Gruppen enthaltenden Monomeren mit einer polymerisierbaren Doppelbindung und

$b_{35}$) eines Esters oder Amids einer $\alpha,\beta$-ungesättigten Dicarbonsäure,

$b_4$) 0 - 80 Gew.% weiterer pfropfaktiver Monomerer und

$b_5$) 0 - 20 Gew.% eines Radikalstarters

3. Thermoplastische Formmassen nach Anspruch 2, dadurch gekennzeichnet, daß die Komponente $b_{33}$) eine Verbindung der allgemeinen Formel II oder III ist:

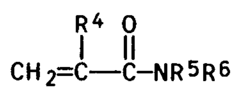 (II)

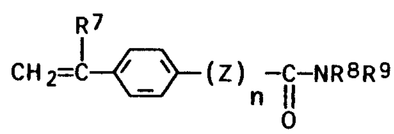 (III)

wobei $R^4$, $R^5$, $R^6$, $R^7$, $R^8$ und $R^9$ Wasserstoff, Alkyl- oder Alkoxygruppen mit 1 bis 12 C-Atomen, Cycloalkylgruppen mit 1 bis 12 C-Atomen oder Arylgruppen und Z eine Alkylengruppe mit 1 bis 12 C-Atomen darstellen und n den Wert 0 oder 1 hat.

4. Thermoplastische Formmassen nach Anspruch 2, dadurch gekennzeichnet, dap die Komponente $b_{34}$) eine Verbindung der allgemeinen Formel IV ist

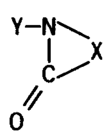 (IV)

wobei X eine lineare oder verzweigte Alkylengruppe mit 2 bis 15 C-Atomen darstellt und Y die allgemeine Formel

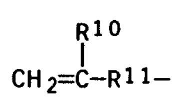

hat,

wobei $R^{10}$ Wasserstoff, eine Alkyl- oder Alkoxygruppe mit 1 bis 4 C-Atomen und $R^{11}$ einen der nachstehenden zweiwertigen Reste

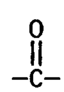

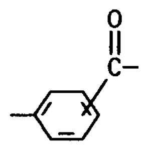 oder

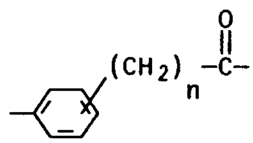 ,

wobei n eine ganze Zahl von 1 bis 4 ist, darstellen.

**5.** Thermoplastische Formmassen nach Anspruch 1, gekennzeichnet durch folgende Gehalte:
A) 5 - 95 Gew.% eines teilaromatischen Copolyamids
B) 5 - 95 Gew.% eines modifizierten Polyphenylenethers, hergestellt aus
$b_1$) 4,95 - 99,9 Gew.% eines unmodifizierten Polyphenylenethers,
$b_2$) 0 - 90 Gew.% eines vinylaromatischen Polymeren,
$b_3$) 0,05 - 10 Gew.% Fumarsäure
$b_4$) 0 - 80 Gew.% weitere pfropfaktive Monomere
$b_5$) 0,01 - 0,09 Gew.% eines Radikalstarters
C) 0 - 45 Gew.% eines vinylaromatischen Polymeren
D) 0 - 40 Gew.% eines schlagzäh modifizierenden Kautschuks.

**6.** Thermoplastische Formmassen nach den Ansprüchen 1 bis 4, dadurch gekennzeichnet, dap der Radikalstarter $b_5$) ausgewählt ist aus der Gruppe bestehend aus organischen Hydroperoxiden oder hochverzweigten Alkanen.

**7.** Verfahren zur Herstellung von thermoplastischen Formmassen gemäß den Ansprüchen 2 bis 6, dadurch gekennzeichnet, daß man die Komponenten $b_1$) bis $b_5$) bei 250 bis 350 °C miteinander umsetzt und das so erhaltene modifizierte Polyphenylenoxid B) mit den Komponenten A) und C) bis D) bei Temperaturen von 270 bis 350 °C vermischt.

**8.** Verwendung der thermoplastischen Formmassen gemäß den Ansprüchen 1 bis 6 zur Herstellung von Formkörpern.

**9.** Formkörper, hergestellt aus Formmassen gemäß den Ansprüchen 1 bis 6 als wesentlichen Komponenten.

**Claims**

**1.** A thermoplastic molding material containing, as essential components,
A) 5-95% by weight of a partially aromatic copolyamide essentially composed of
$A_1$) 20-90% by weight of units derived from terephthalic acid and hexamethylenediamine,
$A_2$) 0-50% by weight of units derived from $\epsilon$-caprolactam and
$A_3$) 0-80% by weight of units derived from adipic acid and hexamethylenediamine
and,
if required, not more than 15% by weight of further polyamide building blocks $A_4$), components $A_2$) and/or $A_3$) accounting in total for not less than 10% by weight of the total units,
B) 5-95% by weight of a polyphenylene ether,
C) 0-45% by weight of a vinylaromatic polymer and
D) 0-40% by weight of a toughened rubber,
the percentages A) to D) summing to 100%.

**2.** A thermoplastic molding material as claimed in claim 1, wherein the polyphenylene ether B) is prepared from
$b_1$) 4.95-99.9% by weight of an unmodified polyphenylene ether,

$b_2$) 0-90% by weight of a vinylaromatic polymer,

$b_3$) 0.05-10% by weight of one or more compounds from the group consisting of

$b_{31}$) an $\alpha,\beta$-unsaturated dicarboxylic acid or its anhydride,

$b_{32}$) a maleimide of the formula I

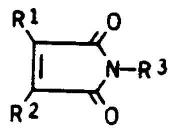

(I)

where $R^1$, $R^2$ and $R^3$ are each hydrogen or an alkyl, alkoxy, cycloalkyl, alkenyl, aryl, arylene or alkylene group of 1 to 12 carbon atoms,

$b_{33}$) a monomer containing amide groups and a polymerizable double bond,

$b_{34}$) a monomer containing lactam groups and a polymerizable double bond and

$b_{35}$) an ester or amide of an $\alpha,\beta$-unsaturated dicarboxylic acid,

$b_4$) 0-80% by weight of further monomers capable of grafting and,

$b_5$) 0-20% by weight of a free radical initiator.

**3.** A thermoplastic molding material as claimed in claim 2, wherein component $b_{33}$) is a compound of the formula II or III

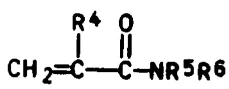

(II)

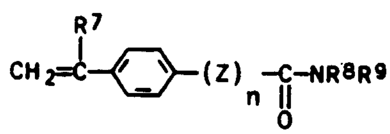

(III)

where $R^4$, $R^5$, $R^6$, $R^7$, $R^8$ and $R^9$ are each hydrogen or an alkyl, alkoxy or cycloalkyl group of 1 to 12 carbon atoms or aryl, Z is alkylene of 1 to 12 carbon atoms and n is 0 or 1.

**4.** A thermoplastic molding material as claimed in claim 2, wherein component $b_{34}$) is a compound of the formula IV

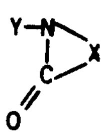

(IV)

where X is straight-chain or branched alkylene of 2 to 15 carbon atoms and Y is of the formula

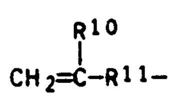

where $R^{10}$ is hydrogen or an alkyl or alkoxy group of 1 to 4 carbon atoms and $R^{11}$ is one of the

following divalent radicals

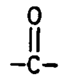

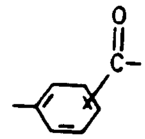 or

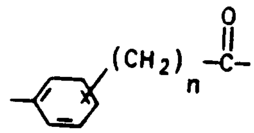 ,

where n is an integer from 1 to 4.

5. A thermoplastic molding material as claimed in claim 1, which contains the following:
   A) 5-95% by weight of a partially aromatic copolyamide,
   B) 5-95% by weight of a modified polyphenylene ether, prepared from
      $b_1$) 4.95-99.9% by weight of an unmodified polyphenylene ether,
      $b_2$) 0-90% by weight of a vinylaromatic polymer,
      $b_3$) 0.05-10% by weight of fumaric acid,
      $b_4$) 0-80% by weight of further monomers capable of grafting and
      $b_5$) 0.01-0.09% by weight of a free radical initiator,
   C) 0-45% by weight of a vinylaromatic polymer and
   D) 0-40% by weight of a rubber impact-modifier.

6. A thermoplastic molding material as claimed in any of claims 1 to 4, wherein the free radical initiator $b_5$) is selected from the group consisting of organic hydroperoxides or highly branched alkanes.

7. A process for the preparation of thermoplastic molding materials as claimed in any of claims 2 to 6, wherein components $b_1$) to $b_5$) are reacted with one another at from 250 to 350 °C and the resulting modified polyphenylene oxide B) is mixed with components A) and C) to D) at from 270 to 350 °C.

8. Use of a thermoplastic molding material as claimed in any of claims 1 to 6 for the production of moldings.

9. A molding produced from a molding material as claimed in any of claims 1 to 6 as an essential component.

## Revendications

1. Masses à mouler thermoplastiques, contenant comme composants essentiels
   A) de 5 à 95% en poids d'un copolyamide partiellement aromatique, essentiellement composé de
      $A_1$) 20 à 90% en poids de motifs qui dérivent d'acide téréphtalique et d'hexaméthylènediamine,
      $A_2$) 0 à 50% en poids de motifs qui dérivent d'$\epsilon$-caprolactame et
      $A_3$) 0 à 80% en poids de motifs qui dérivent d'acide adipique et d'hexaméthylènediamine, et éventuellement jusqu'à 15% en poids d'autres éléments structuraux de polyamide $A_4$), les composants $A_2$) et/ou $A_3$) constituant au total au moins 10% en poids de la totalité des motifs,
   B) de 5 à 95% en poids d'un poly(oxyphénylène),
   C) de 0 à 45% en poids d'un polymère vinylaromatique,
   D) de 0 à 40% en poids d'un caoutchouc modifiant la résilience,

   la somme des pourcentages de A) à D) s'élevant à 100%.

2. Masses à mouler thermoplastiques selon la revendication 1, caractérisées en ce que le poly(oxyphénylène) B) est prépare à partir de
   $b_1$) 4,95 à 99,9% en poids d'un poly(oxyphénylène) non modifié,
   $b_2$) 0 à 90% en poids d'un polymère vinylaromatique,
   $b_3$) 0,05 à 10% en poids d'au moins un composé du groupe constitué par

$b_{31}$) un acide dicarboxylique $\alpha,\beta$-insaturé ou son anhydride,
$b_{32}$) un maléimide de formule générale I

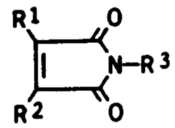

(I),

dans laquelle $R^1$, $R^2$ et $R^3$ représentent des atomes d'hydrogène ou des groupements alkyle, alcoxy, cycloalkyle, alcényle, aryle, arylène ou alkylène à 1-12 atomes de carbone,
$b_{33}$) un monomère contenant des groupements amide et une double liaison polymérisable,
$b_{34}$) un monomère contenant des groupements lactame et une double liaison polymérisable, et
$b_{35}$) un ester ou un amide d'un acide dicarboxylique $\alpha,\beta$-insaturé,
$b_4$) 0 à 80% en poids d'autres monomères à activité de greffage, et
$b_5$) 0 à 20% en poids d'un initiateur radicalaire.

3. Masses à mouler thermoplastiques selon la revendication 2, caractérisées en ce que le composant $b_{33}$) est un composé de formule générale II ou III:

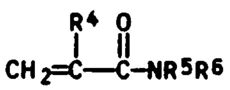

(II)

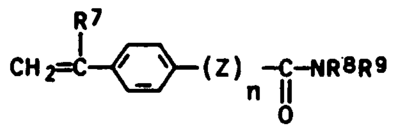

(III)

$R^4$, $R^5$, $R^6$, $R^7$, $R^8$ et $R^9$ représentant des atomes d'hydrogène, des groupements alkyle ou alcoxy à 1-12 atomes de carbone, des groupements cycloalkyle à 1-12 atomes de carbone ou des groupements aryle, Z représentant un groupement alkylène à 1-12 atomes de carbone et n ayant la valeur 0 ou 1.

4. Masses à mouler thermoplastiques selon la revendication 2, caractérisées en ce que le composant $b_{34}$) est un composé de formule générale IV

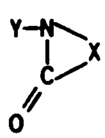

(IV)

X représentant un groupement alkylène linéaire ou ramifié à 2-15 atomes de carbone, et Y ayant la formule générale

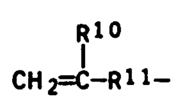

dans laquelle $R^{10}$ représente un atome d'hydrogène ou un groupement alkyle ou alcoxy à 1-4 atomes

de carbone et $R^{11}$ représente l'un des restes bivalents suivants

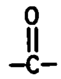

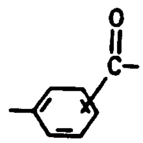 ou

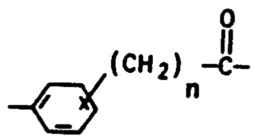 ,

n étant un nombre entier de 1 à 4.

**5.** Masses à mouler thermoplastiques selon la revendication 1, caractérisées par les teneurs suivantes:
A) de 5 à 95% en poids d'un copolyamide partiellement aromatique,
B) de 5 à 95% en poids d'un poly(oxyphénylène) modifié, préparé à partir de
$b_1$) 4,95 à 99,9% en poids d'un poly(oxyphénylène) non modifié,
$b_2$) 0 à 90% en poids d'un polymère vinylaromatique,
$b_3$) 0,05 à 10% en poids d'acide fumarique,
$b_4$) 0 à 80% en poids d'autres monomères à activité de greffage,
$b_5$) 0,01 à 0,09% en poids d'un initiateur radicalaire,
C) de 0 à 45% en poids d'un polymère vinylaromatique,
D) de 0 à 40% en poids d'un caoutchouc modifiant la résilience.

**6.** Masses à mouler thermoplastiques selon l'une quelconque des revendications 1 à 4, caractérisées en ce que l'initiateur radicalaire $b_5$) est choisi dans le groupe constitué par des hydroperoxydes organiques ou des alcanes très ramifiés.

**7.** Procédé de préparation de masses à mouler thermoplastiques selon l'une quelconque des revendications 2 à 6, caractérisé en ce qu'on fait réagir entre eux les composants $b_1$) à $b_5$) à des températures de 250 à 350 °C, et on mélange le poly(oxyphénylène) modifié B) ainsi obtenu avec les composants A), C) et D) à des températures de 270 à 350 °C.

**8.** Utilisation des masses à mouler thermoplastiques selon l'une quelconque des revendications 1 à 6 pour la fabrication de corps moulés.

**9.** Corps moulés, fabriqués à partir de masses à mouler selon l'une quelconque des revendications 1 à 6 en tant que composants essentiels.

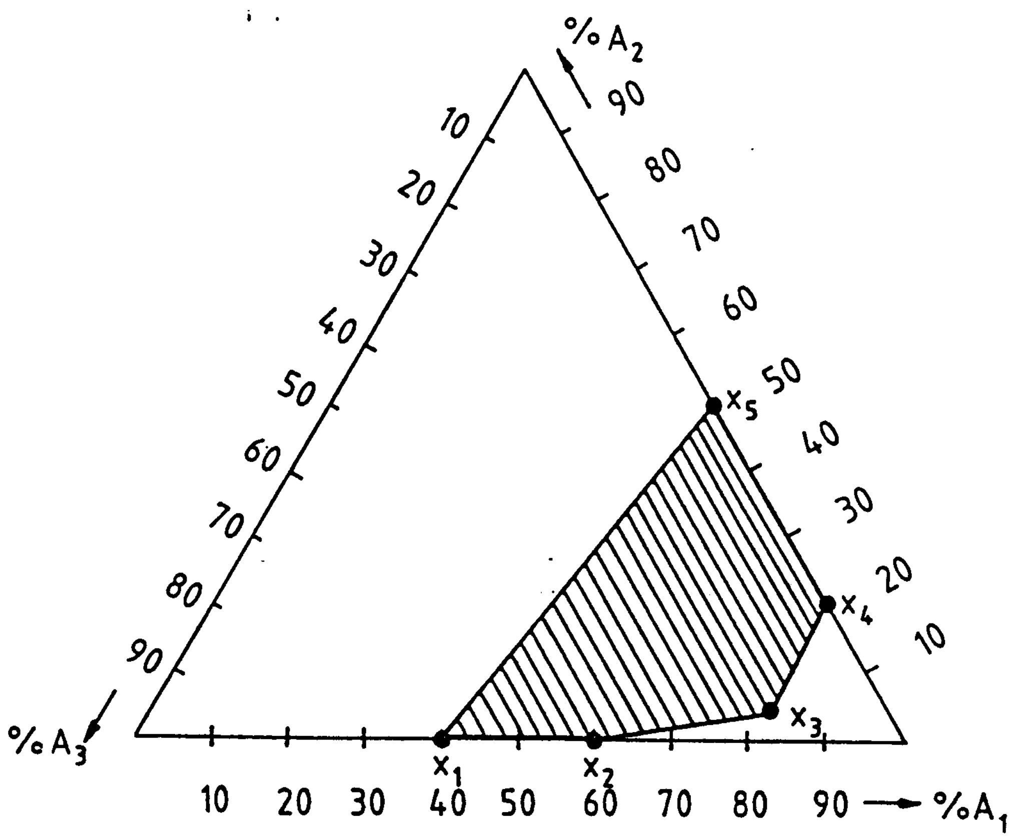
%A2
90
80
70
60
50
40
30
20
10
10
20
30
40
50
60
70
80
90
%A3
x5
x4
x3
x1
x2
10 20 30 40 50 60 70 80 90
%A1